# EUROPÄISCHE PATENTSCHRIFT

(11) **EP 2 171 556 B1**
(45) Veröffentlichungstag und Bekanntmachung des Hinweises auf die Patenterteilung: **20.02.2013**
(21) Anmeldenummer: 08774884.4
(22) Anmeldetag: 08.07.2008
(51) Int. Cl.: G05D 1/02

(54) **VORRICHTUNG UND VERFAHREN ZUR POSITIONS- UND ORIENTIERUNGSBESTIMMUNG**
DEVICE AND METHOD FOR DETERMINING A POSITION AND ORIENTATION
DISPOSITIF ET PROCÉDÉ DE DÉTERMINATION DE POSITION ET D'ORIENTATION

(30) Priorität: 13.07.2007 DE 102007033102
(43) Veröffentlichungstag der Anmeldung: 07.04.2010
(73) Patentinhaber: Mika, Thorsten, 42799 Leichlingen (DE); Fehlis, Hendrik, 53721 Siegburg (DE)
(72) Erfinder: Mika, Thorsten, 42799 Leichlingen (DE); Fehlis, Hendrik, 53721 Siegburg (DE)
(74) Vertreter: Bauer Vorberg Kayser Patentanwälte
(86) Internationale Anmeldenummer: PCT/EP2008/058839
(87) Internationale Veröffentlichungsnummer: WO 2009/010421

(56) Entgegenhaltungen:
- EP-A- 1 658 937
- GB-A- 2 259 823
- US-A- 4 847 773
- US-A1- 2004 221 790
- US-B1- 6 377 888

## Beschreibung

Die vorliegende Erfindung betrifft eine Vorrichtung zur Bestimmung der Position und Orientierung eines beweglichen Gegenstandes, umfassend mindestens zwei Relativsensoren am Gegenstand, die eine relative Veränderung einer Position und/oder Orientierung des Gegenstands registrieren. Ferner sind am Gegenstand mindestens zwei Absolutsensoren vorgesehen, jeweils zur Bestimmung der absoluten Position in einer X-Richtung und einer Y-Richtung In Bezug zu einem Untergrund, wobei die Absolutsensoren als optischer Sensor ausgebildet sind und an dem Gegenstand ferner eine Lichtquelle angeordnet ist. An bekannten Positionen sind Markierungen vorgesehen, die von der Lichtquelle ausgesendetes Licht zu den Absolutsensoren zurückwerfen. Weiterhin betrifft die Erfindung ein entsprechendes Verfahren.

Die Bestimmung der Position von Gegenständen, beispielsweise Fahrzeugen, Robotern und ähnlichem In x-Richtung und/oder y-Richtung sind seit langem durchgeführt. Bekannt ist beispielsweise die Positionsbestimmung von Fahrzeugen mittels GPS, die jedoch nur dann durchführbar ist, wenn ein entsprechender Empfänger Signale von den zugehörigen Satelliten empfangen kann. In Innenräumen ist dies oftmals schwierig, weswegen dort auf andere Verfahren und Vorrichtungen ausgewichen wird.

Die Positionsbestimmung von Gegenständen oder Fahrzeugen in Innenräumen ist z.B. für Industriefahrzeuge (Gabelstapler, Regalsysteme usw.) zur Messung und Steuerung von mobilen Robotern, für virtuelle Studios und für Fernbedienungen von Kameras notwendig. In allen Anwendungsfällen muss die Position meist jederzeit bekannt sein. Neben der Position des Fahrzeugs in zweidimensionaler Ebene ist oftmals auch dessen räumliche Orientierung ein wesentliches Kriterium. Orientierung in diesem Sinne meint die Drehung des Gegenstands oder Fahrzeugs um seine vertikale Achse, beispielsweise die Ausrichtung oder der Schwenkwinkel einer Kamera in einem Fernsehstudio. Für diese Anwendung ist neben der Position des Fahrzeugs (auf dem sich die Kamera befindet), auch dessen Verdrehung oder die Verdrehung der Kamera um die vertikale Achse eine wichtige Information, da diese das aufzunehmende Bild wesentlich beeinflusst.

Auch ist entscheidend, dass die Position nicht nur im Ruhezustand bekannt ist, sondern auch während der Fahrt oder der Bewegung. Die Berechnung der Position und Orientierung muss also mehr oder weniger in Echtzeit erfolgen. Hinzu kommt, dass die Fahrzeuge oder Gegenstände, deren Position bestimmt werden soll, auch einen gewissen Abstand zum Boden aufweisen können, im Extremfall können diese beispielsweise hängend im Raum bewegt werden. Diese Anwendung kommt bei Filmaufnahmen häufig vor.

Ein System für die Ermittlung der absoluten Position, beispielsweise einer Kamera, ist in der EP 1 455 253 A2 offenbart. Im Wesentlichen basiert das System darauf, dass ein Studioboden mit kreisrunden Markern belegt wird, die jeweils ein individuelles Muster aufweisen. Die Position der einzelnen Marker Ist bekannt Die Kamera weist einen Sensor auf, der 20 Bilder/s von den Mustern auf dem Studioboden aufnimmt, wobei die Marker zur Erkennung der absoluten Position genutzt werden. Dabei ist wesentlich, dass nicht nur ein Marker ausgewertet wird, sondern auch diejenigen Marker, die diesen umgeben.

Durch das gleichzeitige Aufnehmen mehrerer benachbarter Marker ist auch die eindeutige Zuordnung eines zentralen Markers möglich. Neben der Positionserkennung ist auch eine Rotationsermittlung aus dem Bild eines Sensors oder zweier Sensoren möglich. Dieses System hat sich insofern bewährt, als dass es eine sehr exakte Positionsbestimmung zu jeder Zeit ermöglicht. Als nachteilig hat sich jedoch die besondere Ausgestaltung des Studiobodens ergeben. Das sich durch die Marker ergebene Muster wird vielfach als störend und nachteilig empfunden, weswegen dieses System oftmals nicht zum Einsatz kommt. Ein wesentlicher Nachteil ist auch, dass ein solcher Bodenbelag bei einer Mischung des realen Bildes mit einem virtuellen Bild, wie es bei Studioproduktionen oftmals der Fall ist, nicht vollständig verschwindet, wie es beispielsweise beim Rest eines blauen Studios der Fall ist. Hinzu kommt, dass die Marker mit der Zeit verschmutzen was zu fehlerhaften Informationen führen kann. Der Studioboden muss deshalb sehr sauber gehalten werden.

Weiterhin ist das Aufbringen des speziell bedruckten Bodens vor Ort, beispielsweise aus PVC, mit erheblichem Aufwand verbunden. Es ist kaum möglich, ein bestehendes Studio mit einem neuen Studioboden auszurüsten, da hierzu sämtliche Einrichtungen und Möbel zunächst entfernt werden müssen. Hinzu kommt, dass der mit Markern bedruckte Boden wegen der festgelegten Position der einzelnen Marker unverändert verlegt werden muss.
Weiterhin sind auch odometrische Systeme bekannt, bei denen die Positionsbestimmung eines Fahrzeugs durch die Beobachtung seiner Räder erfolgt. Dieses grundlegende Navigationsverfahren für bodengebundene Fahrzeuge aller Art hat jedoch den Nachteil, dass die Positionsmessung einer Vielzahl an Einflussgrößen unterliegt, die eine oftmals zu große Abweichung von der Realität bewirken. Hierzu gehören beispielsweise die Radgeometrie (Unrundheit, Verschleiß) die Bodenbeschaffenheit (Unebenheit, Schmutz), die Fahrgestellgeometrie (Spiel, fehlerhafte Messung der Radabstände und Lenkeinrichtung) und das Fahrzeuggewicht (ungleiche Gewichtsverteilung: stärkere Belastung und Verformung einzelner Räder).

Der größte Fehler entsteht dadurch, dass das Rad beim Durchfahren einer Kurve "rutscht; das starre Rad hat eine Ausdehnung vertikal zur Laufrichtung, bei eider Kurve ist der Radius der Innenkante des Rades unterschiedlich zu der der Außenkante. Außerdem folgt das Rad nicht exakt der Kurvenbahn, sondern rutscht meist etwas mehr geradeaus.

Alle diese Fehler fließen in die Positionsdifferenz ein, die zur letzten bekannten Position hinzuaddiert wird. Somit addieren sich die Fehler mit jedem Messschritt auf, und mit länger dauernder Messung entsteht eine immer größere Abweichung. Diese Regeldifferenz In der odometrischen Positionsberechnung ist praktisch nicht zu vermeiden, auch wenn alle Fehlereinflüsse minimiert werden. Insofern ist es notwendig, die Fahrzeuge in regelmäßigen Abständen zurück In eine bekannte Ausgangsposition zu verfahren, um von dort erneut mit der Positionsbestimmung zu beginnen. Dies Ist insbesondere dann notwendig, wenn das Fahrzeug oftmals hin- und herbewegt wurde, da bei solchen Bewegungen die Fehlerhäufigkeit zunimmt.

Ein weiteres Verfahren zur absoluten Positionsbestimmung ist in der GB 2259823 A beschrieben. Bei diesem Verfahren werden an die Wände eines Raumes eine Vielzahl Reflektoren mit eindeutiger Codierung angebracht. Die Position jedes einzelnen Reflektors ist bekannt, aufgrund seiner Codierung ist er auch eindeutig zuzuordnen. Im Bereich der Kamera ist eine Lichtquelle vorgesehen, die die Reflektoren anstrahlt, so dass ein Sensor, z.B. eine Kamera das zurückgeworfene Licht bzw. Signal detektieren kann. Auf Basis der aufgenommenen und eindeutig zuzuordnenden reflektierten Signale kann die Position relativ genau bestimmt werden. Nachteilig bei diesem Verfahren ist jedoch, dass viele Reflektoren vorhanden sein müssen und aufgrund von Einrichtungen, wie Studiomöbeln oder Türen eine durchgängige Anordnung der Reflektoren oftmals nicht möglich ist. Schließlich kommt hinzu, dass an den Wänden angebrachte Reflektoren durch Personen oder weitere Gegenstände nachträglich verdeckt sein können, was bei diesem relativ sensiblen System zu Fehlern oder Berechnungsausfällen führt.

Ferner offenbart die US 6,377,888 B1 ein System zur Überwachung der Bewegung von Fahrzeugen, das wenigstens zwei Relativsensoren aufweist, mit denen eine relative Veränderung einer Position und/oder Orientierung des Fahrzeugs gemessen werden kann, wobei dies durch Zwei-Achsen-Sensoren erfolgt. Diese Sensoren werden ergänzt durch RFID-Sensoren, mit denen die absolute Position des Fahrzeugs ermittelt werden kann, Indem RFID-Tags erfasst werden, die am Untergrund angebracht sind. Die ermittelten absoluten Werte werden dabei verwendet, um auftretende Ungenauigkeiten der ermittelten relativen Werte auszugleichen und so stets möglichst genaue Positionsdaten bereitzustellen.

Die EP 1 658 937 A1 offenbart dagegen ein Robotersystem, das ohne Einrichtungen an einem Gebäude auskommt, um sich eigenständig zu orientieren, während die US 4,847,773 ein System zur Navigation eines Fahrzeugs offenbart, bei dem passive Markierungen auf dem Untergrund angebracht sind, die von mehreren Sensoren am Fahrzeug registriert werden können. Dabei kann die Erfassung der Markierungen durch wenigstens zwei geeignete Absolutsensoren kombiniert werden mit odometrischen Sensoren, wie sie beispielsweise zur Messung eines Weges an den Rädern vorgesehen sein können.

Darüber hinaus offenbart auch die US 2004/221790 A1 ein Verfahren und eine Vorrichtung für die optische Odometrie insbesondere eines Fahrzeugs, wobei zur Bestimmung von relativen Positions- und Orientierungsdaten optische Sensoren eingesetzt werden können, wie sie beispielsweise auch bei einer Computer-Maus verwendet werden. Mit zwei dieser Sensoren kann die Position und Orientierung eines Fahrzeugs bestimmt werden. In einem Ausführungsbeispiel der Erfindung werden diese optischen Sensoren durch weitere Sensoren ergänzt, die Markierungen auf dem Untergrund erfassen, auf dem sich das Fahrzeug bewegt. Diese Markierungen können beispielsweise optisch erfasst werden, um absolute Positionswerte zu erfassen, mit denen die Relativwerte kombiniert werden können, um so die gesamte Positionsbestimmung zu verbessern.

Ausgehend von diesem Stand der Technik besteht die Aufgabe der vorliegenden Erfindung darin, eine Vorrichtung und ein Verfahren zur zweidimensionalen Bestimmung der Position und Orientierung eines beweglichen Gegenstands zu schaffen, das eine ausreichend genaue Bestimmung der geforderten Parameter ermöglicht, dabei aber kostengünstig und einfach hergestellt und installiert werden kann. Die Vorrichtung und das Verfahren sollen sich an unterschiedlichste Gegebenheiten vor Ort anpassen lassen, so dass ein Einsatz unter nahezu sämtlichen Bedingungen möglich ist.

Erfindungsgemäß wird die Aufgabe durch eine Vorrichtung mit den Merkmalen des unabhängigen Patentanspruchs 1 und durch ein Verfahren mit den Verfahrensschritten des unabhängigen Verfahrensanspruchs 6 gelöst.

Erfindungsgemäß erfolgt die Bestimmung der notwendigen Parameter zweistufig, nämlich relativ und absolut. In diesem Zusammenhang wird unter der relativen Parameterbestimmung verstanden, dass lediglich eine Veränderung zum vorhergehenden Messwert registriert wird, beispielsweise die Bewegung und Strecke in eine bestimmte Richtung. Hierzu eignen sich unter anderem magnetische oder optische Verfahren bzw. Vorrichtungen. Als optisches Verfahren kann beispielsweise ein solches Verfahren eingesetzt werden, das auch bei einer optischen Computermaus Verwendung findet. Die Funktionsweise basiert auf moderner Bildverarbeitung. Ein Maussensor-Chip, der im Wesentlichen wie eine kleine Kamera mit einer Recheneinheit funktioniert, nimmt ständig Bilder vom Untergrund auf. Dabei wird der Untergrund meist von einer Leuchtdiode oder einer Laserdiode beleuchtet. Das von der Unterlage reflektierte Licht wird mit einer Linse gebündelt und gelangt in die Minikamera des Maussensor-Chips. Dort werden zunächst Geschwindigkeiten errechnet, aus denen dann schließlich die Bewegungsdaten in X-und Y-Richtung ermittelt werden. Der Mikroprozessor berechnet dabei aus den Unterschieden zwischen nacheinander aufgenommenen Bildern die entsprechende Richtung und Geschwindigkeit der Bewegung der Maus.

Bei der Verwendung optischer Sensoren müssen diese möglichst in Richtung des Untergrundes gerichtet sein, um somit nach Art einer optischen Maus entsprechend Bewegungen ermitteln zu können. Sollte der Untergrund, was selten der Fall ist, derart sauber und glatt sein, dass das System der optischen Maus nicht funktionieren kann, können ggf, entsprechende minimale Markierungen auf den Untergrund aufgebracht werden. Dies ist in der Regel aber nicht notwendig, da moderne optische Systeme bereits Strukturen In der Oberfläche von Materialien zur Auswertung der Bewegung nutzen können. Grundsätzlich können bei einer optischen Abtastung die Muster in sichtbaren oder unsichtbaren Spektrum (Infrarot, ultraviolett) gestaltet sein. Denkbar ist auch die Verwendung von Vorrichtungen, die auf dem herkömmlichen Trackball-System basieren. Diese können beispielsweise In Flüssen des Fahrzeugs untergebracht sein.

für die relative Bestimmung der Parameter ist auch die Verwendung von odometrischen Sensoren denkbar, die zwar fehlerbehaftet sind, aber bezogen auf die relativ kurzen Distanzen zwischen den gemessenen Parametern zunächst ausreichend genaue Daten liefern.

Wesentlich ist, dass der Gegenstand mit mindestens zwei Sensoren zur Ermittlüng der relativen Parameter versehen ist. Nur dadurch ist eine Ermittlung der Orientierung möglich. Ist der Gegenstand beispielsweise durch ein Fahrzeug mit im Wesentlichen rechteckigen Querschnitt gebildet, wäre die Anordnung von je einem Sensor an einer Ecke des Fahrzeugs ausreichend, um eine Drehung um eine vertikale Achse (Hochachse) zu ermitteln.

Die Bestimmung der relativen Parameter ist einfach und kostengünstig. Jedoch reicht diese, wie ausgeführt, oftmals nicht aus bzw. addieren sich Fehler zu unakzeptablen Gesamtfehlern auf. Erfindungsgemäß ist deshalb die Ermittlung absoluter Parameter hinsichtlich der Position und Orientierung ausreichend oft vorgesehen. Dementsprechend sind weiterhin Sensoren zur Erkennung der absoluten Position vorgesehen. Grundsätzlich können diese Sensoren In einem Gerät mit den Sensoren zur Erkennung der relativen Parameter vereint sein (Kamera als Flächensensor). Es sind aber auch, je nach Anwendung, vollständig getrennte Sensoren denkbar.

In einer einfachsten Variante können zur Ermittlung der absoluten Position Markierungen in Form von Linien auf den Untergrund aufgebracht werden, deren Position bekannt ist. Zur Unterscheidung können die Linien z.B. unterschiedlich breit oder nach Art eines Strichcodes ausgebildet sein. Bewegt sich der Gegenstand oder das Fahrzeug über diese Linie, wird automatisch die absolute Position bestimmt. Diese Positions- und Orientierungsbestimmung dient dann als neuer Ausgangspunkt für die anschließend zu ermittelnden relativen Parameter. Je nach Anforderung können Linien oder Muster (beispleisweise ein Gittermuster) weiter oder enger zueinander angeordnet sein. Je enger die Markierungen angeordnet sind, desto häufiger wird die absolute Position des Gegenstands bestimmt.

Als Sensoren für die Bestimmung der absoluten Position haben sich beispielsweise optische oder magnetische Systeme als geeignet erwiesen. So sind Kontrastmarken-Taster (Lichtschrankensysteme) oder eine Zellenkamera einfach zu installieren und zu benutzen. Denkbar ist auch, das Magnetstreifen als Markierungen verwendet werden, aus deren Feldstärke die Position ebenfalls bestimmt werden kann. Schließlich sind auch einfache Meßmethoden, die beispielsweise auf Erhöhungen des Untergrunds basieren, denkbar. Bei diesen berührt ein Zeiger, der vom Gegenstand bzw. Fahrzeug in Richtung Boden ragt, eine Kante und bekommt dadurch einen Impuls, über den die absolute Position bestimmt werden kann.

Grundsätzlich sind alle Arten von Markierungen denkbar, die in Verbindung mit entsprechenden Sensoren die Ermittlung der absoluten Position ermöglichen. So ist beispielsweise auch ein Markierungsstreifen denkbar, der wiederum durch Querstriche nach Art eines Zollstocks oder Lineals entlang seiner Längsachse unterteilt ist. Ein entsprechender Sensor ist also somit in der Lage, die exakte Position sowohl In X- als auch in Y-Richtung sofort zu bestimmen. Hierzu ist es lediglich notwendig, dass die Unterteilung oder der Linie in regelmäßigen, eindeutig zuzuordnenden Schritten und Markierungen erfolgt.

Die Orientierung des Gegenstands wird auch bei der Bestimmung der absoluten Position aus der Auswertung zweier Sensoren ermittelt, um auch die Orientierung bestimmen zu können.

Alternativ zur Ermittlung der absoluten Position und Orientierung durch Markierungen am Untergrund werden erfindungsgemäß Markierungen im Umfeld bzw. angrenzend an die vom Gegenstand zu befahrende Fläche genutzt. So können beispielsweise linienförmige Reflektoren an Wände eines Raumes angebracht werden, deren Position bekannt ist und die jeweils eindeutig zuzuordnen sind. Eine Lichtquelle, die sich am Gegenstand befindet, sendet entsprechendes Licht aus, das reflektiert und in Richtung des Gegenstands zurückgeworfen wird. Ein entsprechender Sensor, beispielsweise eine übliche CCD-Zeilenkamera, nimmt das zurückgeworfene Licht von mindestens drei Reflektoren auf und berechnet daraus die absolute Position. Sollten keine Wände zum Anbringen der Reflektoren vorhanden sein, können diese auch von einer Decke abgehängt oder auf Ständern aufgestellt werden. Wesentlich ist lediglich, dass deren jeweilige Position eindeutig bekannt ist. Auch bei diesem System erfolgt die Positions- und Orientierungskennung zunächst mit Hilfe relativ arbeitender Sensoren, wobei die Ermittlung der absoluten Parameter beispielsweise In zeitlich regelmäßigen Abständen oder in Abhängigkeit der gefahrenen Strecke erfolgt. Auch hierbei ist die Häufigkeit der Ermittlung der absoluten Parameter in Abhängigkeit der Anforderungen frei wählbar. Die ermittelte absolute Position wird auch bei diesem Systern als Ausgangspunkt für die sich anschließenden relativen Messungen genommen.

Anstelle der Markierungen als Linien für die Ermittlung der absoluten Parameter sind auch andere Formen, wie beispielsweise Punkte oder alphanumerische Zeichen denkbar.

Idealerweise kann eine Kamera mit Flächensensor jeweils die Aufgabe beider Sensoren, also der Relativ- und Absolutsensoren übernehmen. Dies bedeutet, dass nur zwei Kameras am Gegenstand angeordnet sein müssen.

Die Erfindung wird anhand der nachfolgenden Figurenbeschreibung näher erläutert. Diese sollen nur beispielhaft zu verstehen sein, sie dienen lediglich der Erläuterung der Erfindung. Grundsätzlich sind auch weitere Ausführungsvarianten möglich. Es zeigen:
- Fig. 1:: eine Ausführungsvariante einer Vorrichtung von oben,
- Fig. 2:: eine perspektivische Darstellung einer Ausführungsvariante der erfindungsgemäßen Vorrichtung.

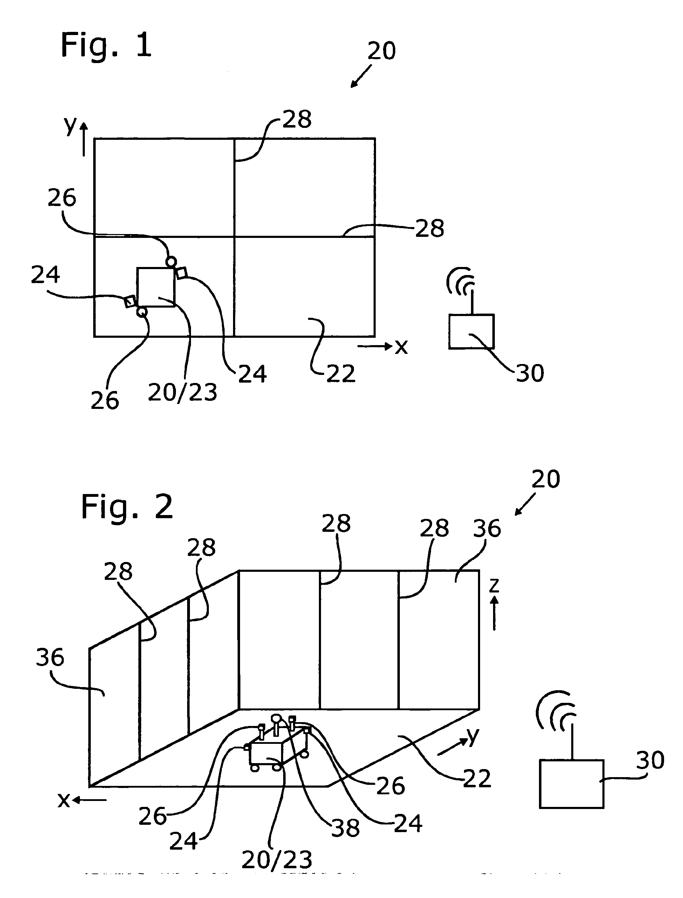

Figur 1 zeigt eine Ausführungsvariante einer Vorrichtung in einer stark vereinfachten Prinzipdarstellung auf einem Untergrund 20. Diese Ausführungsvariante kann bezüglich der Beschreibung der Relativsensoren mit der erfindungsgemä-βen Vorrichtung übereinstimmen, weicht jedoch bezüglich der Ausrichtung der Absolutsensoren von dieser ab. Im gezeigten Ausführungsbeispiel ist ein Fahrzeug 22, das auf dem Untergrund 20 vorzugsweise ferngesteuert bewegbar. An dem Fahrzeug sind zwei Relativsensoren 24 und zwei Absolutsensoren 26 jeweils in Eckbereichen des Fahrzeugs 22 angeordnet. Die Relativsensoren 24 dienen der relativen Bestimmung von Position und Orientierung des Fahrzeugs 22. Die Bestimmung von relativen Parametern basiert darauf, dass die Bestimmung jeweils auf einem zuvor ermittelten Wert basiert, also nicht objektiv neu bestimmt wird. Die relativen Daten reichen zwar für viele Anwendungsfälle aus, aufgrund der sich aufaddierenden Fehler muss jedoch die Position und Orientierung des Fahrzeugs 22 In regelmäßigen Abständen absolut neu bestimmt werden, damit daraufhin die relative Bestimmung wieder ausreichend genau ist. Zu diesem Zweck sind die Absolutsensoren 26 vorgesehen. Die Relativsensoren 24 sind vorzugsweise als optische Sensoren nach Art einer optischen Computermaus ausgeführt und in Richtung des Untergrunds 20 gerichtet.

Im gezeigten Ausführungsbeispiel sind auf dem Untergrund 20 Markierungen 28 angeordnet, deren Position bekannt ist.

Die Absolutsensoren 26 sind bei dieser Ausführungsvariante in Richtung des Untergrunds 20 gerichtet und registrieren, wenn das Fahrzeug 22 über eine Markierung 28 hinweg fährt. Sobald ein Signal von der Markierung 28 aufgenommen wird, werden die aktuellen relativen Posltlons- und Orlentlerungsdaten an die absolute Position und Orientierung angepasst, so dass ab dann die Relativsensoren 24 wieder sehr genaue Daten liefern können, wenn das Fahrzeug 22 zwischen den Markierungen 28 verfahren wird. Die Anpassung der ermittelten Daten kann über einen Rechner 30 mit einem entsprechenden Prozessor und der dazugehörigen Software erfolgen, der über Funk mit dem Fahrzeug 22 bzw. den Sensoren 26, 28 in Verbindung steht oder unmittelbar auf dem Fahrzeug 22 angeordnet ist.

Die Ermittlung der absoluten Orientierung des Fahrzeugs 22 auf dem Untergrund 20 wird dadurch ermittelt, dass beide Absolutsensoren 26 jeweils die Markierungen 28 überfahren, woraus dann unmittelbar auf die Verdrehung des Fahrzeugs 22 um eine Hochachse geschlossen werden kann.

Die Sensoren 24, 26 können als getrennte Sensoren ausgestaltet sein, denkbar ist aber auch nur ein Sensor, der sowohl die relativen als auch die absoluten Parameter ermittelt. Für diesen Fall wären also je Fahrzeug 22 nur zwei Sensoren 24, 26 notwendig.

Figur 2 zeigt eine Ausführungsform der erfindungsgemäßen Vorrichtung, bei der die Markierungen 28 an Wänden 36 angebracht sind. Die Markierungen 28 sind als Reflektoren ausgeführt und reflektieren Licht, das von einer Lichtquelle 38 ausgesendet wird, die auf dem Fahrzeug 22 angeordnet ist. Der zugehörige Absolutsensor 26 ist beispielsweise als CCD-Zeilenkamera ausgeführt, die die reflektierte Strahlung von mindestens drei Markierungen 28 detektiert und erkennt. Die Markierungen 28 sind jeweils eindeutig codiert, so dass deren bekannte Position der Berechnung der absoluten Position im Fahrzeug 22 zugrunde gelegt werden kann. Auch bei dieser Ausführungsvariante kann ein Rechner 30 vorgesehen sein, der die notwendigen Rechenoperationen durchführt.

Die erfindungsgemäße Vorrichtung und das erfindungsgemäße Verfahren haben den großen Vorteil, dass es sich um ein hybrides System handelt, bei dem je nach Anforderungen genauere oder weniger genauere Informationen zur Bestimmung der Position und Orientierung ermittelt werden können. Es ist lediglich eine Anpassung der zeitlichen und/oder der räumlichen Abstände der Ermittlung der absoluten Position notwendig. Es ist nicht notwendig, den gesamten Untergrund 20 mit Markierungen 28 zu bedecken, da meist ohnehin nur relative Bewegungen gemessen werden müssen. Es ist lediglich das schnelle und einfache Aufbringen von wenigen Markierungen 28 notwendig. Das Verfahren und die Vorrichtung können optimal an gegebene Bedingungen vor Ort angepasst werden.

In einer besonders vorteilhaften Ausführungsvariante können beliebige Muster zur Orientierung verwendet werden bzw. können alle Markierungen gleich aussehen. Das System lernt dann während der Initialisierung bzw. erstmaligen Installation die Lage der Markierungen, das System ist kalibrierbar. Ab dann sind die Markierungen eindeutig zugeordnet (quasi codiert), obwohl sie identisch aussehen. Ebenfalls können beliebige Objekte im Raum als Referenzmuster verwendet werden und/oder feststehende Objekte, wie Dekorationsteile, Wände, Podeste u.ä. vom optischen System erfasst und genutzt werden.

Die Erfindung ist nicht auf die beschriebenen Ausführungsbeispiele beschränkt, sondern umfasst sämtliche Ausführungsvarianten, die sich den Grundgedanken der Erfindung zunutze machen.

## Patentansprüche

1. Vorrichtung zur Bestimmung einer Position und Orientierung eines bewegten Gegenstands mit
- mindestens zwei Relativsensoren (24) am Gegenstand, die eine relative Veränderung einer Position und/oder Orientierung des Gegenstands registrieren,
- mindestens zwei Absolutsensoren (26) am Gegenstand, jeweils zur Bestimmung der absoluten Position in einer X-Richtung und einer Y-Richtung in Bezug zu einem Untergrund (20), wobei die Absolutsensoren (26) als optischer Sensor ausgebildet sind und an dem Gegenstand ferner eine Lichtquelle (38) angeordnet ist, und Markierungen (28) an bekannten Positionen vorgesehen sind, die von der Lichtquelle (38) ausgesendetes Licht zu den Absolutsensoren (26) zurückwerfen,
**dadurch gekennzeichnet, dass**
die Markierungen (28) als Reflektoren an umgebenden Wänden (36) angeordnet sind, wobei die Reflektoren (28) eindeutig codiert sind, so dass die Vorrichtung kalibrierbar ist, indem sie während einer Initialisierung die Lage der Reflektoren (28) lernt und diese eindeutig zuordnet, und dass die Vorrichtung das zurückgeworfene Licht von mindestens drei eindeutig codierten Reflektoren (28) aufnimmt, um deren bekannte Position der Berechnung der absoluten Position des Gegenstands zugrunde zu legen.

2. Vorrichtung nach Anspruch 1, **dadurch gekennzeichnet, dass** die Relativsensoren (24) als optische Sensoren ausgebildet sind.

3. Vorrichtung nach Anspruch 1, **dadurch gekennzeichnet, dass** die Relativsensoren (24) als Odometer ausgebildet sind.

4. Vorrichtung nach Anspruch 1, **dadurch gekennzeichnet, dass** die Markierung (28) durch eine einfache Linie gebildet ist.

5. Vorrichtung nach Anspruch 1, **dadurch gekennzeichnet, dass** mehrere Markierungen (28) in Form von Gitterlinien aufgebracht sind.

6. Verfahren zur zweidimensionalen Bestimmung der Position und Orientierung eines beweglichen Gegenstands mit einer Vorrichtung nach Anspruch 1 mit den Verfahrensschritten
- permanentes Bestimmen der relativen Position und Orientierung des Gegenstands mit Hilfe der Relativsensoren (24), zwischenzeitliches Bestimmen der absoluten Position und Orientierung des Gegenstands mit Hilfe der Absolutsensoren (26), die mit den Markierungen (28) in Form von Reflektoren an umgebenden Wänden (36), deren Position bekannt ist, zusammenwirken, wobei das zurückgeworfene Licht von mindestens drei eindeutig codierten Reflektoren (28) aufgenommen wird und deren bekannte Position der Berechnung der absoluten Position des Gegenstands zugrunde gelegt wird, und
- Übernehmen der ermittelten absoluten Position und Orientierung des Ausgangswertes zur anschließenden Bestimmung der relativen Position und Orientierung durch die Relativsensoren (24).

## Claims

1. A device for determining a position and orientation of a moving object, comprising
- at least two relative sensors (24) on the object, which register a relative change of a position and/or orientation of the object,
- at least two absolute sensors (26) on the object, each for determining the absolute position In an X direction and a Y direction In relation to a substrate (20), wherein the absolute sensors (26) are configured as an optical sensor and moreover a light source (38) is arranged on the object, and markings (28) are provided at known positions, which reflect light emitted by the light source (38) to the absolute sensors (26),
**characterised in that**
the markings (28) are disposed as reflectors on surrounding walls (36), the reflectors (28) being uniquely coded so that the device can be calibrated by learning, in the course of an initialisation, the position of the reflectors (28) and uniquely attributing them, and that the device acquires the reflected light of at least three uniquely coded reflectors (28) to base the calculation of the absolute position of the object on their known positions.

2. A device according to claim 1, **characterised in that** the relative sensors (24) are configured as optical sensors.

3. A device according to claim 1, **characterised in that** the relative sensors (24) are configured as odometers.

4. A device according to claim 1, **characterised in that** the marking (28) Is formed by a simple line.

5. A device according to claim 1, **characterised in that** several markings (28) are applied in the form of grid lines.

6. A method for the two-dimensional determination of the position and orientation of a movable object with a device according to claim 1, with the following method steps:
- permanently determining the relative position and orientation of the object by means of the relative sensors (24),
- intermittently determining the absolute position and orientation of the object by means of the absolute sensors (26), which cooperate with the markings (28) in the form of reflectors on surrounding walls (36) whose position is known, wherein the reflected light of at least three uniquely coded reflectors (28) Is acquired and the calculation of the absolute position of the object is based on their known positions, and
- adopting the determined absolute position and orientation of the initial value for subsequently determining the relative position and orientation by means of the relative sensors (24).

## Revendications

1. Dispositif de détermination d'une position et orientation d'un objet déplacé, comprenant
- au moins deux capteurs relatifs (24) sur ledit objet qui enregistrent un changement relatif d'une position et/ou orientation de l'objet,
- au moins deux capteurs absolus (26) sur ledit objet, respectivement pour la détermination de la position absolue dans une direction X et dans une direction Y par rapport à un sol (20), lesdits capteurs absolus (26) étant réalisés en tant que capteur optique, et, en outre, une source de lumière (38) étant disposée sur ledit objet, et des repères (28) étant prévus sur des positions connues, qui réfléchissent de la lumière émise par ladite source de lumière (38), en direction des capteurs absolus (26),
**caractérise par le fait que**
lesdits repères (28) sont disposés en tant que réflecteurs sur des parois entourantes (36), lesdits réflecteurs (28) étant codés clairement de sorte que le dispositif peut être calibré **par le fait que**, durant une initialisation, il apprend la position des réflecteurs (28) et associe ceux-ci clairement, et que le dispositif reçoit la lumière réfléchie en provenance d'au moins trois réflecteurs (28) clairement codés afin de mettre leur position connue à la base du calcul de la position absolue de l'objet.

2. Dispositif selon la revendication 1, **caractérisé par le fait que** lesdits capteurs relatifs (24) sont réalisés en tant que capteurs optiques.

3. Dispositif selon la revendication 1, **caractérisé par le fait que** lesdits capteurs relatifs (24) sont réalisés en tant qu'odomètres.

4. Dispositif selon la revendication 1, **caractérisé par le fait que** ledit repère (28) est formé par une simple ligne.

5. Dispositif selon la revendication 1, **caractérisé par le fait que** plusieurs repères (28) sont appliqués sous forme de lignes quadrillées.

6. Procédé de détermination à deux dimensions de la position et de l'orientation d'un objet mobil, à l'aide d'un dispositif selon la revendication 1, comprenant les étapes de procédé consistant à
- déterminer en permanence les position et orientation relatives dudit objet à l'aide des capteurs relatifs (24),
- déterminer entre-temps les position et orientation absolues de l'objet à l'aide des capteurs absolus (26) qui agissent de concert avec les repères (28) sous forme de réflecteurs sur des parois entourantes (36), dont la position est connue, la lumière réfléchie en provenance d'au moins trois réflecteurs (28) codés clairement étant reçue et la position connue de ceux-ci étant mise à la base du calcul de la position absolue de l'objet, et
- prendre les position et orientation absolues déterminées de la valeur de départ pour déterminer ensuite les position et orientation relatives par les capteurs relatifs (24).
